# EUROPÄISCHE PATENTSCHRIFT

(11) **EP 2 625 955 B1**
(45) Veröffentlichungstag und Bekanntmachung des Hinweises auf die Patenterteilung: **27.09.2017**
(21) Anmeldenummer: 13401009.9
(22) Anmeldetag: 04.02.2013
(51) Int. Cl.: A01M 7/00

(54) **LANDWIRTSCHAFTLICHE FELDSPRITZE**
AGRICULTURAL FIELD SPRAYING DEVICE
PULVERISATEUR AGRICOLE

(30) Priorität: 09.02.2012 DE 102012101052
(43) Veröffentlichungstag der Anmeldung: 14.08.2013
(73) Patentinhaber: Amazonen-Werke H. Dreyer GmbH & Co. KG, 49205 Hasbergen (DE)
(72) Erfinder: Ehlen, Volker, 49205 Hasbergen (DE)

(56) Entgegenhaltungen:
- EP-A2- 1 692 928
- EP-A2- 1 813 150
- DE-A1-102009 053 213
- US-A1- 2011 153 169

## Beschreibung

Die Erfindung betrifft eine landwirtschaftliche Feldspritze gemäß des Oberbegriffes des Patentanspruches 1.

Eine derartige landwirtschaftliche Feldspritze ist in der EP 1 813 150 A2 beschrieben. Diese Feldspritze weist ein teleskopartig ausgebildetes Spritzgestänge auf. Aufgrund des teleskopartig ausgebildeten Spritzgestänges lässt sich die Gestängebreite durch Einziehen einzelner Sektionen des Gestänges über motorische Stellelemente reduzieren. Die motorischen Stellelemente werden von einem mit GPS ausgerüstetem Bordcomputer angesteuert. Hierdurch ist eine konturengenaue Reduzierung der Gestängebreite möglich. Weiterhin ist jeder Reduzierung auch eine Düsenschaltfunktion zugeordnet. Hiermit soll dann das komplette Spritzenmanagement weitgehend automatisiert werden, indem eine konturgenaue Applikation erfolgt, die Hindernisse selbstständig erkannt werden und eine Kollision durch entsprechend vorausschauende Reduzierung der Gestängebreite vermieden wird.

Aufgrund der hohen gleichmäßigen Fahrgeschwindigkeit der Feldspritze muss die Reduzierung schon sehr frühzeitig erfolgen, damit ausreichend rechtzeitig die Gestängebreite reduziert ist, so dass große Flächenbereiche nicht korrekt bearbeitet werden.

Der Erfindung liegt die Aufgabe zu Grunde, im Hinblick auf eine möglichst vollständige Bearbeitung der Flächen, aber dennoch eine Kollision des Gestänges mit Hindernissen zu vermeiden, auf einfache Weise eine Verbesserung zu erreichen.

Diese Aufgabe der Erfindung gemäß dadurch gelöst, dass in dem Speicher der elektronischen Steuer- und/oder Regeleinrichtung ein Programm, mittels welchem die Geschwindigkeit der Feldspritze ermittelbar ist, mit welcher die Feldspritze maximal sich vorwärts bewegen darf, um einen oder mehrere Gestängeabschnitte durch einziehen in Außerbetriebsstellung zum kollisionsfreien Passieren des sich im Feld befindlichen Hindernisses und/oder zum Anpassen an die Kontur der zu bearbeitenden Fläche zu bringen, hinterlegt ist.

Infolge dieser Maßnahmen wird durch die Reduzierung der Fahrgeschwindigkeit, angepasst an die jeweilige Hindernissituation, eine wesentliche Verbesserung erreicht. Durch die Erkennung von Hindernissen im Spritzbereich wird das Einziehen von Teilsektionen sowie die Teilbreitenschaltung zur Abschaltung einzelner Düsen automatisch durchgeführt. Durch die Anpassung der Geschwindigkeit der Maschine in der Weise, so dass die Fahrgeschwindigkeit der Feldspritze in Abhängigkeit des Abstandes zum Hindernis verzögert oder die feldspritze erforderlichenfalls zum Stillstand gebracht wird. Die Feldspritze "steuert" quasi den die Feldspritze ziehenden Schlepper oder die Antriebsvorrichtung einer selbstfahrenden Feldspritze.

Um dem Fahrer der Feldspritze ausreichende Informationen geben zu können, ist vorgesehen, dass die elektronische Steuerungs- und/oder Regeleinrichtung eine Anzeigevorrichtung aufweist, dass mittels der Anzeigevorrichtung die aktuell zu fahrende Fahrgeschwindigkeit anzeigbar ist.

Eine Automatisierung des Betriebes der Feldspritze lässt sich dadurch erreichen, dass mittels der elektronischen Steuerungs- und/oder Regeleinrichtung die aktuell zu fahrende Geschwindigkeit der Feldspritze und/oder des die Feldspritze ziehenden Schleppers einstellbar, steuerbar und/oder regelbar ist.

Insbesondere, wenn sehr viele einzelne Sektionen des Spritzgestänges oder das gesamte Spritzgestänge eingezogen werden müssen, ist vorgesehen, dass erforderlichenfalls die Feldspritze vor dem Passieren des Hindernisses zum Stillstand gebracht wird.

Um eine Flexibilisierung der Aufnahmemengen verschiedenartiger Flüssigkeiten in einem Flüssigkeitstank zu ermöglichen, ist vorgesehen, dass in dem Flüssigkeitstank zum Aufteilen des Flüssigkeitstanks in zumindest zwei voneinander getrennte Flüssigkeitsaufnahmebereiche zumindest eine flexible Zwischenwand angeordnet ist.

Bei einer landwirtschaftliche Feldspritze mit zumindest einem Flüssigkeitstank, einer Pumpe, einer Dosierarmatur, zumindest einer in den Flüssigkeitstank einmündenden Rücklaufleitung und zumindest einer sich in mehrere Spritzleitungen verzweigenden und zumindest eine Dosierarmatur aufweisenden Druckleitung, einem Verteilergestänge mit mehreren Gestängeabschnitten, die gelenkig miteinander verbunden sind und jeweils mittels motorischer Stellelemente in eine Betriebsstellung und eine Außerbetriebsstellung überführbar und denen die Spritzleitungen mit Ausbringelementen zugeordnet sind, ist vorgesehen, dass in dem Flüssigkeitstank zum Aufteilen des Flüssigkeitstank in zwei voneinander getrennte Flüssigkeitsaufnahmebereiche eine flexible Zwischenwand angeordnet ist.

Weitere Einzelheiten der Erfindung sind der Beispielsbeschreibung zu entnehmen. Die Zeichnungen zeigen
- Fig.1: eine schematische Darstellung des Passierens eines Hindernisses einer Feldspritze mit Spritzgestänge mit reduzierter Geschwindigkeit,
- Fig.2: eine schematische Darstellung des Passierens eines Hindernisses einer Feldspritze mit Spritzgestänge, wobei die Feldspritze vor und nach dem Passieren des Hindernisses jeweils zum Stillstand gebracht wird,
- Fig.3: eine schematische Darstellung des Reduzierung der Fahrgeschwindigkeit beim Einfahren in das Vorgewende am Feldende und
- Fig.4: einen Flüssigkeitstank einer Feldspritze mit durch eine flexible Zwischenwand in zwei voneinander getrennten Bereichen, aber nicht gemäß der Erfindung.

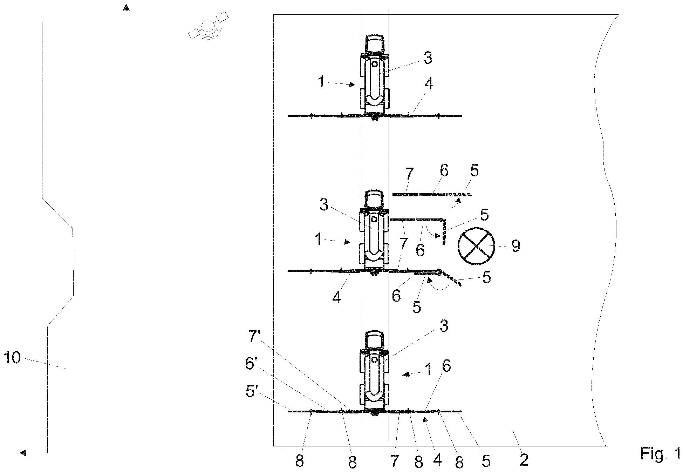

Entsprechend der schematischen Darstellung in Fig.1 soll mit einer landwirtschaftlichen Feldspritze 1 auf einer Feldfläche 2 Flüssigkeiten ausgebracht werden. In der Darstellung in Fig.1 ist die Feldspritze 1 als selbstfahrende Feldspritze ausgebildet. Die Feldspritze weist zu mindestens einen Flüssigkeitstank 3, eine Pumpe eine Dosierarmatur, zumindest eine in den Flüssigkeitstank 3 einmündenden Rücklaufleitung und zumindest eine sich in mehrere Spritzleitung verzweigenden und zumindest eine Dosierarmatur aufweisenden Druckleitung, ein Verteilergestänge 4 mit mehreren Gestängeabschnitten 5, 5', 6, 6', 7, 7'auf.

Die Gestängeabschnitte 5, 5', 6, 6', 7, 7'sind mittels Gelenken 8 miteinander verbunden und jeweils mittels motorischer Stellelemente in eine Betriebsstellung und eine Außerbetriebsstellung überführbar. Weiterhin sind den einzelnen Gestängeabschnitten 5, 5', 6, 6', 7, 7'die Spritzleitungen mit Ausbringelementen zugeordnet.

Der Feldspritze 1 ist ein als elektronische Steuer- und/oder Regeleinrichtung ausgebildeter Bordrechner zugeordnet. Der Bordrechner weist ein GPS-Modul auf. Von dem Bordrechner aus können die zwischen den einzelnen Gestängeabschnitten 5, 5', 6, 6', 7, 7' angeordneten jedoch nicht dargestellten motorischen Stellelemente angesteuert werden, um die Gestängeabschnitte 5, 5', 6, 6', 7, 7' individuell in Arbeitsstellung auszufahren oder in Transportstellung oder in eine eingeklappte Stellung einzuziehen.

In einer Ausführungsform ist vorgesehen, dass in dem Bordcomputer die Position von Hindernissen in dem Speicher des Bordcomputers hinterlegt ist. Hierdurch ist es möglich, entsprechend der in dem Speicher des Bordcomputers hinterlegten Position der Hindernisse 9 in dem zu bearbeitenden Feld 2 erforderlichenfalls ein oder mehrere Gestängeabschnitte 5, 5', 6, 6', 7, 7' des Gestänges 4 rechtzeitig vor dem Passieren des jeweiligen Hindernisses einzuziehen und nach dem Passieren des jeweiligen Hindernisses wieder auszufahren. Hierzu werden dann rechtzeitig von dem Bordcomputer die entsprechenden motorischen Stellelemente zum Ein- und Ausfahren der jeweiligen Gestängeabschnitte 5, 5', 6, 6', 7, 7' entsprechend angesteuert.

Hierbei ist das in dem Speicher des Bordrechners hinterlegte Programm derart ausgestaltet dass mittels des Programmes die Geschwindigkeit in der Feldspritze 1 ermittelbar ist, mit welcher die Feldspritze 1 maximal sich vorwärts bewegen darf, um einen oder mehreren Gestängeabschnitte 5, 5', 6, 6', 7, 7' durch einziehen in Außerbetriebsstellung zum kollisionsfreien passieren des sich im Feld 2 befindlichen Hindernisses 9 zu bringen, hinterlegt ist.

Hierbei weist der Bordcomputer einer Anzeigevorrichtung auf, mittels welcher die aktuell zu fahrende Fahrgeschwindigkeit anzeigbar ist. Hierdurch wird in dem Fahrer angezeigt, mit welcher Geschwindigkeit er jeweils fahren darf (wie dies in dem Geschwindigkeitsdiagramm 10 in Fig.1 dargestellt ist), damit einerseits ohne dass Gestängeabschnitte 5, 5', 6, 6', 7, 7' mit dem Hindernis 9 kollidieren diese eingezogen werden können und rechtzeitig nach dem Passieren des Hindernisses 9 wieder ausgeklappt werden können, um bestmöglichst die Ausbringarbeit durchführen zu können, wie dies schematisch in Fig.1 mit gestrichelten Linien im Bereich des Hindernisses 9 durch die Darstellung von verschiedenen Situation für die rechte Seite des Gestänges 4 dargestellt ist. Wenn die Geschwindigkeit der Feldspritze 1 reduziert wird, wird durch entsprechende Ansteuerung der Dosierorgane der Feldspritze 2 von dem Bordcomputer die aktuelle Ausbringmenge verändert, so dass die pro Flächeneinheit ausgebrachte Flüssigkeitsmenge, die von der Feldspritze ausgebracht wird, konstant gehalten bzw. die vorgesehene Flüssigkeitsmenge eingehalten wird.

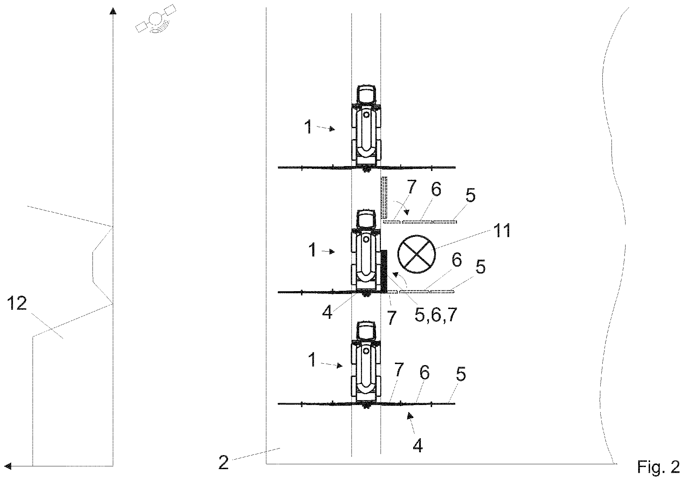

Die Arbeitsweise, wie sie in Fig.2 dargestellt ist, unterscheidet sich von der in Fig.1 dargestellten Arbeitsweise dadurch, dass die Feldspritze 1 unmittelbar vor und nach dem Passieren des Hindernisses 11 jeweils Stillstand (siehe hierzu auch das in Fig.2 dargestellte Geschwindigkeitsdiagramm 12) gebracht wird. Dies ist erforderlich, weil das Hindernis 11 sich sehr dicht an der Feldspritze 1 befindet und die gesamten Gestängeabschnitte 5, 5', 6, 6', 7, 7' auf der rechten Seite der Feldspritze 1 in Transportstellung eingeklagt und nach dem Passieren des Hindernisses 11 wieder ausgeklappt werden müssen. Auch diese Arbeitsweise ist in dem Speicher des Bordcomputers abgespeichert und wird auf der Anzeigevorrichtung des Bordcomputers dem Fahrer angezeigt. Mit gestrichelten Linien ist die Gestängesituation im Bereich des Hindernisses vor und nach dem Einziehen dargestellt.

Es ist jedoch auch möglich, dass mittels des Bordcomputers die aktuell zu fahrende Geschwindigkeit der Feldspritze 1 und/oder des die Feldspritze ziehenden Schleppers einstellbar, steuerbar und oder regelbar ist, so dass über das in dem Speicher des Bordcomputers hinterlegten Programm die Fahrgeschwindigkeit der Feldspritze bestimmt wird.

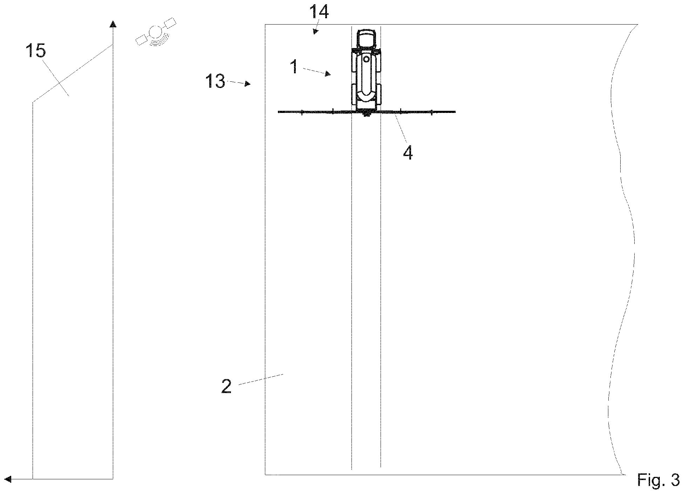

In Fig. 3 ist schematisch die Situation beim Einfahren für die Feldspritze 1 in das Vorgewende 13 am zählt Feldende 14 dargestellt. Hier wird, wie durch das Geschwindigkeitsdiagramm 15 dargestellt ist, am Feldende 14 die Geschwindigkeit bis zum Stillstand reduziert. Die jeweils aktuell zu fahrende Fahrgeschwindigkeit wird entsprechend auf der Anzeigevorrichtung des Bordcomputers angezeigt. Auch kann, wie vorgeschrieben, die Fahrgeschwindigkeitsregelung durch den Bordcomputer automatisch vorgenommen werden.

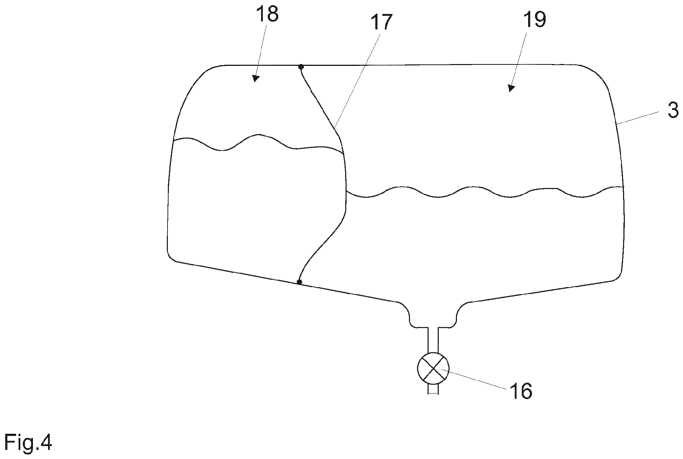

In der Fig. 4 ist ein Flüssigkeitstank 3 einer vorbeschriebenen Feldspritze dargestellt. Diese Feldspritze weist zu mindestens einen Flüssigkeitstank 3, eine Pumpe 16 eine Dosierarmatur, zumindest eine in den Flüssigkeitstank 3 einmündenden Rücklaufleitung und zumindest eine sich in mehrere Spritzleitung verzweigenden und zumindest eine Dosierarmatur aufweisenden Druckleitung, ein Verteilergestänge mit mehreren gelenkig miteinander verbundenen Gestängeabschnitte auf.

In dem Flüssigkeitstank 3 ist eine flexible Zwischenwand 17 zum Aufteilen des Flüssigkeitstanks 3 in zwei voneinander getrennte Flüssigkeitsaufnahmebereiche 18 und 19 angeordnet. Durch diese flexible Zwischenwand 17 ist das Aufnahmevermögen der einzelnen Flüssigkeitsaufnahmebereiche 19 und 19 entsprechend variabel ausgestaltet.

## Patentansprüche

1. Landwirtschaftliche Feldspritze (1) mit zumindest einem Flüssigkeitstank (3), einer Pumpe, einer Dosierarmatur, zumindest einer in den Flüssigkeitstank (3) einmündenden Rücklaufleitung und zumindest einer sich in mehrere Spritzleitungen verzweigenden und zumindest eine Dosierarmatur aufweisenden Druckleitung, einem Verteilergestänge (4) mit mehreren Gestängeabschnitten (5, 5', 6, 6', 7, 7'), die jeweils
mittels motorischer Stellelemente in eine Betriebsstellung und eine Außerbetriebsstellung überführbar und denen die Spritzleitungen mit Ausbringelementen zugeordnet sind, wobei über eine ein GPS-Modul aufweisende elektronische Steuer- und/oder Regeleinrichtung die motorischen Stellelemente zum Überführen der Gestängeabschnitte (5, 5', 6, 6', 7, 7') in die jeweilige Betriebs- oder Außerbetriebsstellung ansteuerbar sind und zwar derart, dass die Gestängeabschnitte (5, 5', 6, 6', 7, 7') entsprechend der Kontur der zu bearbeitenden Fläche (2) in Betriebsstellung bringbar und/oder bei Hindernissen (9, 11) durch Einziehen eines oder mehrerer Gestängeabschnitte (5, 5', 6, 6', 7, 7') in ihre Außerbetriebsstellung überführbar sind,
**dadurch gekennzeichnet, dass** die Gestängeabschnitte gelenkig miteinander verbunden sind, und dass in dem Speicher der elektronischen Steuer- und/oder Regeleinrichtung ein Programm hinterlegt ist, mittels dem diejenige Geschwindigkeit der Feldspritze (1) ermittelbar ist, mit der die Feldspritze (1) sich maximal vorwärts bewegen darf, um einen oder mehrere Gestängeabschnitte (5, 5', 6, 6', 7, 7') durch Einziehen in Außerbetriebsstellung zum kollisionsfreien Passieren des sich im Feld (2) befindlichen Hindernisses (9,11) und/oder zum Anpassen an die Kontur der zu bearbeitenden Fläche (2) zu bringen.

2. Feldspritze nach Anspruch 1, **dadurch gekennzeichnet, dass** die elektronische Steuerungs- und/oder Regeleinrichtung eine Anzeigevorrichtung aufweist, dass mittels der Anzeigevorrichtung die aktuell zu fahrende Fahrgeschwindigkeit anzeigbar ist.

3. Feldspritze nach zumindest einem der vorstehenden Ansprüche, **dadurch gekennzeichnet, dass** mittels der elektronischen Steuerungs- und/oder Regeleinrichtung die aktuell zu fahrende Geschwindigkeit der Feldspritze (1) und/oder des die Feldspritze (1) ziehenden Schleppers einstellbar, steuerbar und/oder regelbar ist.

4. Feldspritze nach Anspruch 3, **dadurch gekennzeichnet, dass** erforderlichenfalls die Feldspritze (1) vor dem Passieren des Hindernisses (11) zum Stillstand gebracht wird.

## Claims

1. Agricultural field spraying device (1) having at least one liquid tank (3), a pump, a metering valve, at least one return line which opens into the liquid tank (3), at least one pressure line which branches into a plurality of spraying lines and has at least one metering valve, and a distribution linkage (4) having a plurality of linkage sections (5, 5', 6, 6', 7, 7') which can each be transferred by means of motor-operated actuating elements into an operating position and an inoperative position and to which the spraying lines, having dispensing elements, are assigned, wherein the motor-operated actuating elements for transferring the linkage sections (5, 5', 6, 6', 7, 7') into the respective operating or inoperative position can be actuated via an electronic control and/or regulating device having a GPS module, to be precise in such a way that the linkage sections (5, 5', 6, 6', 7, 7') can be brought into an operating position corresponding to the contour of the surface (2) to be worked and/or, in the event of obstacles (9, 11), can be transferred into their inoperative position by retracting one or more linkage sections (5, 5', 6, 6', 7, 7'),
**characterized in that**
the linkage sections are connected to one another in an articulated manner, and **in that** a program is stored in the memory of the electronic control and/or regulating device and makes it possible to determine that speed of the field spraying device (1) at which the field spraying device (1) may move forwards to a maximum in order to bring one or more linkage sections (5, 5', 6, 6', 7, 7') into the inoperative position by retraction for collision-free passing of the obstacle (9, 11) situated in the field (2) and/or for adaptation to the contour of the surface (2) to be worked.

2. Field spraying device according to Claim 1, **characterized in that** the electronic control and/or regulating device has a display device, **in that** the driving speed currently to be driven at can be displayed by means of the display device.

3. Field spraying device according to at least one of the preceding claims, **characterized in that** the speed of the field spraying device (1) and/or of the tractor pulling the field spraying device (1) that is currently to be driven at can be set, controlled and/or regulated by means of the electronic control and/or regulating device.

4. Field spraying device according to Claim 3, **characterized in that**, where required, the field spraying device (1) is brought to a standstill before passing the obstacle (11).

## Revendications

1. Pulvérisateur agricole (1) avec au moins un réservoir de liquide (3), une pompe, une armature de dosage, au moins une conduite de retour débouchant dans le réservoir de liquide (3) et au moins une conduite sous pression se ramifiant en plusieurs conduites de pulvérisation et présentant au moins une armature de dosage, une rampe de distribution (4) avec plusieurs parties de rampe (5, 5', 6, 6', 7, 7'), qui peuvent être respectivement amenées au moyen d'éléments de réglage motorisés dans une position de fonctionnement et dans une position de non-utilisation et auxquelles les conduites de pulvérisation avec des éléments de projection sont associées, dans lequel les éléments de réglage motorisés peuvent être commandés par un dispositif de commande et/ou de régulation électronique présentant un module GPS pour transférer les parties de rampe (5, 5', 6, 6', 7, 7') respectivement dans la position de fonctionnement ou dans la position de non-utilisation, notamment de telle manière que les parties de rampe (5, 5', 6, 6', 7, 7') puissent être amenées dans la position de fonctionnement en fonction du contour de la surface à traiter (2) et/ou ramenées dans leur position de non-utilisation en cas d'obstacles (9, 11) par retrait d'une ou de plusieurs partie(s) de rampe (5, 5', 6, 6', 7, 7'),
**caractérisé en ce que** les parties de rampe sont reliées l'une à l'autre de façon articulée, et **en ce qu'**un programme est stocké dans la mémoire du dispositif de commande et/ou de régulation électronique, au moyen duquel on peut déterminer la vitesse du pulvérisateur (1), avec laquelle le pulvérisateur (1) peut au maximum se déplacer vers l'avant, afin d'amener une ou plusieurs parties de rampe (5, 5', 6, 6', 7, 7') par retrait dans la position de non-utilisation pour le franchissement sans collision de l'obstacle (9, 11) se trouvant dans le champ (2) et/ou pour l'adaptation au contour de la surface à traiter (2).

2. Pulvérisateur selon la revendication 1, **caractérisé en ce que** le dispositif de commande et/ou de régulation électronique présente un dispositif d'affichage, et **en ce que** la vitesse de marche à utiliser actuellement peut être affichée au moyen du dispositif d'affichage.

3. Pulvérisateur selon au moins une des revendications précédentes, **caractérisé en ce que** la vitesse à utiliser actuellement du pulvérisateur (1) et/ou du tracteur remorquant le pulvérisateur (1) peut être réglée, commandée et/ou régulée au moyen du dispositif de commande et/ou de régulation électronique.

4. Pulvérisateur selon la revendication 3, **caractérisé en ce que** le pulvérisateur (1) est nécessairement mis à l'arrêt avant de franchir l'obstacle (11).
